# EUROPÄISCHE PATENTSCHRIFT

(11) **EP 0 914 726 B1**
(45) Veröffentlichungstag und Bekanntmachung des Hinweises auf die Patenterteilung: **22.08.2001**
(21) Anmeldenummer: 97931689.0
(22) Anmeldetag: 30.06.1997
(51) Int. Cl.: H04B 7/26

(54) **VERFAHREN ZUM BETRIEB VON TDMA-FUNKSYSTEMEN**
PROCESS FOR OPERATION OF TIME DIVISION MULTIPLE ACCESS (TDMA) RADIO SYSTEMS
PROCEDE PERMETTANT DE FAIRE FONCTIONNER DES SYSTEMES RADIO A ACCES MULTIPLE PAR REPARTITION DANS LE TEMPS

(30) Priorität: 25.07.1996 DE 19630048
(43) Veröffentlichungstag der Anmeldung: 12.05.1999
(73) Patentinhaber: SIEMENS AKTIENGESELLSCHAFT, 80333 München (DE)
(72) Erfinder: PILLEKAMP, Klaus-Dieter, D-40699 Erkrath (DE)
(86) Internationale Anmeldenummer: DE9701369
(87) Internationale Veröffentlichungsnummer: WO9805131

(56) Entgegenhaltungen:
- EP-A- 0 671 825
- GB-A- 2 249 922
- YOSHIHIKO AKAIWA ET AL: "AUTONOMOUS DECENTRALIZED INTER-BASE-STATION SYNCHRONIZATION FOR TDMA MICROCELLULAR SYSTEMS" GATEWAY TO THE FUTURE - TECHNOLOGY IN MOTION, ST. LOUIS, MAY 19 - 22, 1991, Nr. CONF. 41, 19.Mai 1991, INSTITUTE OF ELECTRICAL AND ELECTRONICS ENGINEERS, Seiten 257-262, XP000260188

## Beschreibung

Die Erfindung betrifft ein Verfahren zum störungsfreien Betrieb von TDMA-Funksystemen, insbesondere bei Schnurlos-Kommunikationssystemen nach dem DECT-Standard.

An moderne Systeme zur Nachrichtenübertragung wird die Forderung gestellt, bei einem minimalen Bedarf an Frequenzbandbreite eine maximale Menge an Sprach- und Dateninformation wirtschaftlich zu übertragen. Für Funksysteme erlangt diese Forderung besondere Bedeutung, da mit dem in seiner Breite beschränkten, technisch nutzbaren Frequenzspektrum besonders ökonomisch umgegangen werden muß. In vielen Fällen verwendet man daher sog. Multiplexverfahren, mit denen eine simultane Übertragung mehrerer Gespräche bzw. Datenflüsse über einen gemeinsamen Übertragungskanal möglich ist.

Man unterscheidet dabei grundsätzlich zwei Multiplexverfahren, das Frequenz- und das Zeitmultiplexverfahren.
Das Frequenzmultiplexverfahren FDM (Frequency Division Multiplex) beruht auf der Unterteilung eines gegebenen Frequenzbandes in mehrere gleiche Abschnitte (Frequenzkanäle). Jeder Abschnitt kann dann für die Übertragung z.B. eines Gespräches genutzt werden. FDM-Verfahren werden vor allem bei der Übertragung analoger Signale verwendet.
Das Zeitmultiplexverfahren TDM (Time Division Multiplex) eignet sich dagegen nur für digitale Signale. Dabei werden mehrere Einzelkanäle für eine, z.B. über ein Kabel oder eine Funkstrecke erfolgende Übertragung zu einem gemeinsamen Übertragungskanal zusammengefaßt, indem der digitale Datenfluß in jedem Einzelkanal in einzelne Datenpakete (Bitrahmen) unterteilt wird und diese Bitrahmen verschiedener Einzelkanäle jeweils zu Übertragungsrahmen zusammengefaßt werden, die dann seriell, d.h. einer nach dem anderen, auf der Übertragungsstrecke übertragen werden. Dabei wird den Einzelkanälen jeweils ein Zeitschlitz in jedem Übertragungsrahmen fest zugeordnet und darin ein Bitrahmen des entsprechenden Einzelkanals unter Nutzung der gesamten zur Verfügung stehenden Frequenzbandbreite übertragen. Beim Empfänger werden die Daten wieder aus den Zeitschlitzen der Übertragungsrahmen ausgelesen und den einzelnen Empfangskanälen zugeordnet.

Mit den beiden genannten Multiplextechniken läßt sich für eine Übertragungstrecke die Anzahl der Kommunikationskanäle vervielfachen und dadurch ihre Wirtschaftlichkeit erhöhen. In einem Funksystem besteht in der Regel darüber hinaus die Forderung, die durch ein Multiplexverfahren erzeugten Kanäle für eine möglichst große Anzahl von Teilnehmern verfügbar zu machen. Dazu wird der sog. Vielfachzugriff "Multiple Access" verwendet, der sowohl bei FDM als auch bei TDM möglich ist. Entsprechende Systeme werden dann als FDMA- bzw. TDMA-Systeme (Frequency Division Multiple Access bzw. Time Division Multiple Access) bezeichnet.

Im folgenden werden ausschließlich TDMA-Systeme oder entsprechende TDMA-Ebenen in komplexeren aus mehreren Ebenen mit verschiedenen Multiplextechniken zusammengesetzten Funksystemen (z.B. FDMA/TDMA-Kombination bei DECT-Schnurlos-Kommunikationssystemen) betrachtet.

Aus der GB 2 249 922 A ist ein Verfahren zum Betrieb von TDMA-Funksystemen bekannt, bei dem eine in einem ersten TDMA-Funksystem auftretende und durch eine zeitliche Drift der ersten TDMA-Rahmen des TDMA-Funksystems relativ zu zweiten TDMA-Rahmen eines zweiten TDMA-Funksystems hervorgerufene Kollision der TDMA-Rahmen erkannt wird.

Aus der US 5,528,597 und der IEEE-Publikation "Y. Akaiwa, H. Andoh und T. Kohama: Autonomous Decentralized Inter-Base-Station Synchronization for TDMA Microcellular Systems", 1991, S. 257 bis 262 ist jeweils ein Verfahren zur Synchronisierung von mehreren Funkübertragungssystemen, die jeweils wenigstens aus einer Daten in Zeitschlitzen sendenden/empfangenden Basisstation bestehen, bekannt, bei dem von einem ersten System die folgenden Schritte durchgeführt werden:
Erfassen, ob sich ein oder mehrere weitere aktive Systeme in Empfangs-/Sende-Reichweite befinden,
Erfassen der relativen zeitlichen Versätze der Zeitschlitze von jedem der weiteren aktiven Systeme in Sende-/Empfangs-Reichweite bezüglich der Zeitschlitze des ersten Systems, Speichern der erfaßten relativen zeitlichen Versätze und Verschieben der zeitlichen Lage der Zeitschlitze des ersten Systems derart, daß die Anzahl der erfaßten zeitlichen Versätze minimiert wird.

Wird ein TDMA-Funksystem, z.B. innerhalb eines übergeordneten, aus mehreren solcher Systeme aufgebauten zellularen Kommunikationssystems, in der Nähe eines anderen, das gleiche Frequenzband benutzenden TDMA-Funksystems betrieben, so kann es zu gegenseitigen Störungen kommen. Solche unerwünschten Beeinträchtigungen der Übertragungsqualität können vermieden werden, indem beim Aufbau einer neuen Verbindung in einem der Teilsysteme stets ein TDMA-Kanal ausgewählt wird, dessen Zeitschlitze im TDMA-Übertragungsrahmen zeitlich gegenüber den Zeitschlitzen der gleichzeitig in anderen TDMA-Teilsystemen verwendeten Einzelkanälen verschoben und daher ausreichend ungestört sind.

Nicht-synchronisierte TDMA-Funksysteme, z.B. auf der Basis des DECT-Standards, haben jedoch den Nachteil, daß die als Taktgeber wirkenden Zeitbasen der einzelnen TDMA-Systeme Toleranzen (Bei DECT: +/- 5ppm) in ihrer Ganggenauigkeit aufweisen. In der Regel ergibt sich daher eine relative zeitliche Drift der TDMA-Rahmenstrukturen beider Systeme gegeneinander. Diese Drift führt in der Praxis dazu, daß eine zunächst in einem freien, d.h. ungestörten Zeitbereich eines TDMA-Rahmens aufgebaute Verbindung mit der Zeit in einen bereits von einem anderen TDMA-System benutzten Zeitbereich gelangen und damit Störungen der entsprechenden Verbindung in diesem System auslösen kann. Abhängig von den Gegebenheiten können dabei auch noch weitere Funkkanäle in anderen Funksystemen von den Störungen betroffen sein.

Üblicherweise (z.B. bei DECT) weichen die TDMA-Systeme beim Erkennen einer Störung wenn möglich durch Wechseln des Funkkanals ("Handover") aus. Dafür ist jedoch stets das Vorhandensein eines ungenutzten und ungestörten Funkkanals erforderlich. Außerdem hat ein Kanalwechsel, wenn er für den Funkteilnehmer unbemerkt und daher unterbrechungsfrei erfolgen soll, den weiteren Nachteil, daß für die kurze Zeit des Kanalwechsels zwei Funkkanäle gleichzeitig benötigt werden. Durch häufige Kanalwechsel kann es daher schnell zu Lastspitzen bei den insgesamt belegten Funkkanälen und zu dadurch bedingten Kanalblockaden kommen. Besteht dann für eine gestörte Verbindung wegen einer solchen Blockade keine Möglichkeit auf einem freien Kanal weitergeführt zu werden, kann es unter Umständen sogar zum Verbindungsabbruch kommen.

Der Erfindung liegt die Aufgabe zugrunde, ein Verfahren für den störungsfreien Betrieb eines TDMA-Funksystems unter Wegfall der o.g. Nachteile anzugeben.

Die Aufgabe wird gelöst durch ein Verfahren, das die im Patentanspruch 1 genannten Merkmale aufweist.

Anders als bei herkömmlichen TDMA-Funksystemen, bei denen einer Kanalstörung durch Fortsetzung der gestörten Verbindung auf einem anderen Funkkanal unter Inkaufnahme der o.g. Nachteile ausgewichen wird, zeichnet sich das erfindungsgemäße Verfahren zum Betrieb von TDMA-Funksystemen durch die Beseitigung der Ursache einer Störung aus.

Dabei wird eine durch mangelnde Synchronität der Zeitbasen eines ersten und wenigstens eines weiteren TDMA-Funksystems bedingte Störung in wenigstens einem dieser TDMA-Funksysteme anhand der Zerstörung des letzten/der letzten Bits eines in einem TDMA-Zeitschlitz übertragenen Bitrahmens erkannt. Damit ist das frühzeitige Erkennen einer "Sliding Collision", bei der sich ein gerade genutzter Zeitschlitz der TDMA-Rahmenstruktur eines Systems über einen ebenfalls belegten Zeitschlitz der TDMA-Rahmenstruktur eines anderen Systems schiebt, möglich, da im "langsameren" System zuerst die letzten Bits eines jeden im gestörten Zeitschlitz übertragenen Bitrahmens zerstört werden.

Beispielsweise bei DECT-Systemen gehört das Erkennen solcher sog. "Sliding Collisions" bereits zum Standard und die jeweils in einem TDMA-Zeitschlitz zu übertragenden Bitrahmen weisen spezielle Bitfelder auf, durch deren Vergleich beim Empfänger ein Ineinanderdriften von TDMA-Rahmen verschiedener Systeme erkannt werden kann.

Die Behebung der Störung erfolgt dann erfindungsgemäß, indem die Zeitbasen der sich gegenseitig beeinflussenden, asynchronen TDMA-Systeme zwangssynchronisiert werden. Dazu wird die Frequenz der Zeitbasis zumindest eines von je zwei an der Störung beteiligten TDMA-Funksystemen so angepaßt, daß die Zeitbasen der TDMA-Funksysteme gleichlaufen. Zum einen wird damit, durch die mit der Frequenzanpassung verbundene Verschiebung der TDMA-Rahmen der Systeme gegeneinander, die zeitliche Überlappung der jeweils einer bestehenden Verbindung zugeordneten Zeitbereiche beseitigt und so die aufgetretene Störung behoben. Zum anderen wird durch die Zwangssynchronisation aber auch ein weiteres zeitliches Driften der zugehörigen TDMA-Rahmen gegeneinander und damit die Ursache möglicher weiterer Störungen von vorneherein unterbunden.
Von Vorteil ist bei diesem Verfahren außerdem, daß die genannten, mit einem Kanalwechsel verbundenen Nachteile vermieden werden.

Vorteilhafte Weiterbildungen und Ausgestaltungen der Erfindung sind Gegenstand der Unteransprüche.

Entsprechend ist es nach einer weiteren Ausgestaltung der Erfindung - Anspruch 2 - zweckmäßig, daß jeder in einem TDMA-Zeitschlitz übertragene Bitrahmen an seinem Ende ein Bitfeld enthält, das nur redundante und/oder für die Nutzdatenübertragung nicht benötigte Informationen beinhaltet. Dies ist z.B. bei DECT-Systemen bereits im Standard entsprechend vorgegeben.

Bei einer weiteren Ausgestaltung der Erfindung - Anspruch 3 - erfolgt die Anpassung der Frequenzen der Zeitbasen der TDMA-Funksysteme aneinander iterativ in kleinen Schritten. Dabei wird die Frequenzänderung durch die Iteration so eingestellt, daß einerseits die Frequenzdifferenz der Zeitbasen aufgehoben wird, andererseits aber auch keine Überkompensation sondern eine weitgehende Synchronisation der betroffenen Systeme erfolgt. Durch die schrittweise Frequenzanpassung wird außerdem ein plötzliches Desynchronisieren von Sender und Empfänger in einem TDMA-Funkssystem und damit einen Abbruch der entsprechenden Verbindung, eine kurzzeitige Unterbrechung oder zumindest einen Kanalwechsel verhindert. In einem DECT-System beispielsweise, kann eine iterative Frequenzänderung unter Aufrechterhaltung einer Verbindung zwischen einer Basisstation und einem Mobilteil erfolgen, während ein einmaliger größerer Frequenzsprung dazu führen würde, daß das Mobilteil für die Fortsetzung der Verbindung erst einen neuen Kontakt zu einer Basisstation aufbauen müßte.

Ebenfalls ist es zweckmäßig, um einem Informationsverlust vorzubeugen, daß - nach Anspruch 4 - die Frequenzänderung jeweils in einem Zeitfenster erfolgt, in dem im betroffenen TDMA-System keine Datenübertragung stattfindet. Diese Zeitfenster sind in der Regel durch eine sog. Schutzzeit ("Guard-Space") jeweils zwischen den einzelnen Einzelkanälen eines TDMA-Rahmens gegeben.

Nach einer vorteilhaften Weiterbildung der Erfindung - Anspruch 5 - wird im Falle einer gegenseitigen Störung von TDMA-Funkssystemen durch Überlappung von genutzten TDMA-Funkkanälen, zumindest in einem der betroffenen Systeme von dem gestörten Funkkanal zu einem anderen ausreichend ungestörten Funkkanal gewechselt, wenn der Betrag der für ein Gleichlaufen der Zeitbasen der sich störenden TDMA-Funksysteme benötigten Frequenzänderung einen vorgegebenen Grenzbetrag überschreitet. Damit wird eine Frequenzanpassung von vorneherein auf einen gewünschten und realisierbaren, vorgegebenen Frequenzbereich um eine Sollfrequenz beschränkt und verhindert, daß eine z.B. durch eine beliebige externe Störung hervorgerufene Beeinflussung eines TDMA-Systems zu einer unkontrollierten Frequenzänderung ohne Aussicht auf Beseitigung der Störung führt.

Bei einer anderen Weiterbildung der Erfindung - Anspruch 6 - wird nach Beendigung einer jeden Funkverbindung in einem TDMA-Funksystem die veränderte Frequenz seiner Zeitbasis wieder auf ihren ursprünglichen Wert vor der Frequenzanpassung zurückgesetzt. Dadurch wird ausgeschlossen, daß ein z.B. auf den maximal zulässigen Frequenzkorrekturwert eingestelltes TDMA-System auf Dauer frequenzbestimmend wird, was zur Folge hätte, daß der Spielraum für weitere Frequenzanpassungen bei benachbarten Systemen und damit die Möglichkeit eine Synchronisierung mehrerer Systeme im Umfeld des frequenzbestimmenden Systems zu erreichen stark eingeschränkt wäre.

Nachstehend wird die Erfindung am Beispiel eines DECT-Systems unter Bezugnahme auf Zeichnungen näher erläutert.

Es zeigt
- FIG 1: den Aufbau eines Bitrahmens in einem Zeitschlitz eines TDMA-Rahmens nach dem DECT-Standard;
- FIG 2: schematisch das Zustandekommen einer "Sliding Collision" ;
- FIG 3: ein Flußdiagramm zur Behandlung einer "Sliding Collision" gemäß dem erfindungsgemäßen Verfahren;

Im DECT-Standard sind durch Unterteilung des verfügbaren Frequenzbandes mittels FDMA in 10 Unterbänder und weitere Unterteilung dieser Unterbänder in je 24 Kanäle mittels TDMA 240 Kanäle definiert. Ein TDMA-Rahmen (Übertragungsrahmen) besteht demnach aus 24 Zeitschlitzen. Für bidirektionale Verbindungen werden jeweils zwei Kanäle zu einem Vollduplex-Kanal zusammengefaßt, so daß sich insgesamt 120 Vollduplex-Kanäle ergeben. Die durch zeitliche Aneinanderreihung der nacheinander übertragenen TDMA-Rahmen entstehende übergeordnete Struktur wird als DECT-Multiframe bezeichnet.

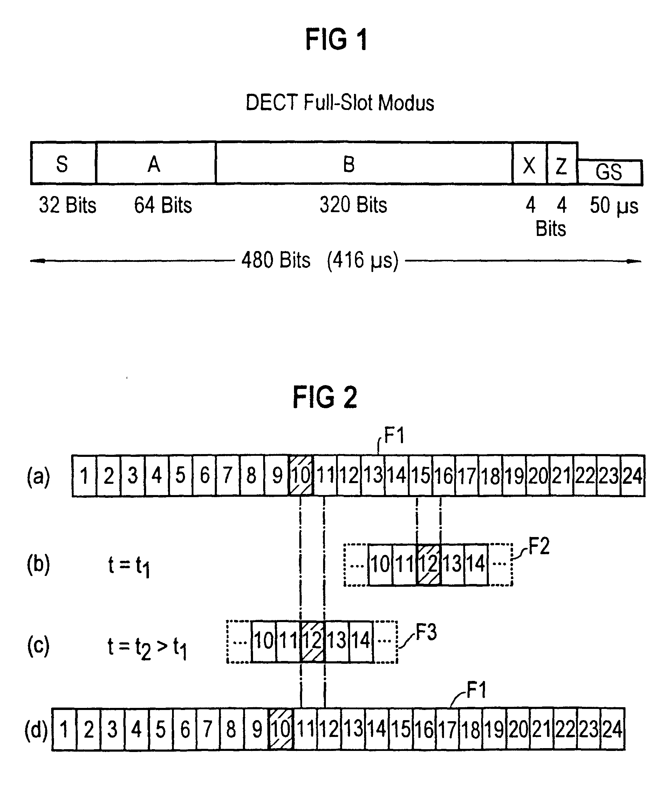

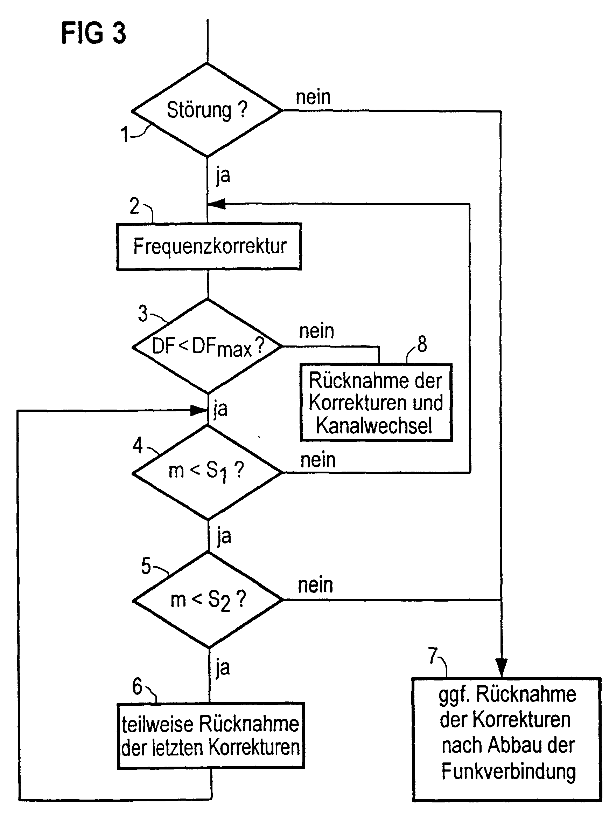

In FIG 1 ist für DECT-Systeme der Aufbau eines in einem Zeitschlitz eines TDMA-Rahmens übertragenen Bitrahmens im sog. Full-Slot Modus, dem gebräuchlichsten Betriebsmodus eines DECT-Systems, dargestellt. Ein Bitrahmen wird in 416µs übertragen und hat eine Gesamtlänge von 480 Bit. Das die ersten 32 Bit umfassende Synchronisationsfeld S dient der Taktrückgewinnung und Synchronisation des Empfängers für jeden Bitrahmen. Das daran anschließende, 64 Bit lange Header-Feld A enthält Signalisierungs- und Kontrolldaten. Die eigentlichen Nutzdaten werden im 320 Bit langen Nutzerdatenfeld B übertragen. Für die Erfindung sind vor allem die sich anschließenden Felder X und Z mit jeweils 4 Bit Länge von Bedeutung. Am Ende eines jeden Bitrahmens schließt sich noch eine Schutzzeit GS an, die bei DECT 50µs beträgt. Das X-Feld wird durch eine spezielle Paritätsbestimmung, einem sog. "Cyclic Redundancy Check" CRC, aus ausgewählten Bits des B-Feldes gewonnen und dient damit in erster Linie als Indikator für eine fehlerhafte Übertragung im B-Feld. Durch Verdopplung des X-Feldes entsteht das Z-Feld. Es enthält dementsprechend redundante Daten und dient der Erkennung von unsynchronisierten DECT-Systemen in der Umgebung. Dazu wird der Inhalt des Z-Feldes beim Empfänger mit dem Inhalt des vorangehenden X-Feldes verglichen und über eine statistische Auswertung auf Abweichungen davon untersucht. Treten systematische Abweichungen auf, so gilt eine "Sliding Collission" als erkannt und Maßnahmen zur Behebung der Störung werden eingeleitet. An diesem Punkt setzt die weiter unten im Zusammenhang mit FIG 2 und FIG 3 beschriebene Erfindung an. Neben den X- und Z-Feldern, die zur Detektion einer Störung am Ende des Bitrahmens verwendet werden, kann auch das S-Feld am Beginn eines jeden Bitrahmens zur Detektion einer Störung am Rahmenanfang genutzt werden.

In FIG 2 sind das Zustandekommen einer "Sliding Collision" und ihre Behebung gemäß der Erfindung schematisch dargestellt:

Das Teilbild (a) in FIG 2 zeigt einen aus 24 Zeitschlitzen bestehenden DECT-Übertragungsrahmen F1. Der hervorgehobene Zeitschlitz 10 sei gerade für eine Funkverbindung zwischen Basisstation und Mobilteil in einem ersten DECT-System benutzt (Für die entgegengesetzte Richtung Mobilteil-Basisstation wird Kanal 22 benutzt, der zusammen mit Kanal 10 einen Vollduplex-Kanal bildet).

Im Teilbild (b) in FIG 2 ist für einen Zeitpunkt t1 ein Ausschnitt aus einem Übertragungsrahmen F2 eines zweiten, in der Umgebung des ersten befindlichen DECT-Systems, bei dem gerade der Zeitschlitz 12 (zusammen mit Zeitschlitz 24) durch ein Gespräch belegt ist, dargestellt. Die jeweils genutzten Kanäle 10 bzw. 12 (und 22 bzw. 24) der beiden DECT-Systeme weisen keine zeitliche Überlappung auf und stören sich daher nicht.

Der interne Takt der Zeitbasen von DECT-Systemen weist in der Regel innerhalb eines definierten Toleranzbereiches Abweichungen von einem standardisierten Sollwert auf. Zwischen den Zeitbasen zweier DECT-Systeme kann es daher zu einer Drift kommen, die eine Verschiebung der TDMA-Rahmenstrukturen (DECT-Multiframes) beider Systeme gegeneinander bewirkt. Kommen dabei ursprünglich zeitlich zueinander verschobene Zeitschlitze beider Systeme zumindest teilweise zeitlich zur Dekkung, so können gegenseitige Störungen auftreten.

Dieser Fall ist in FIG 2 im Teilbild (c) dargestellt. Der Takt des zweiten Systems verläuft mit leicht höherer Frequenz als der des ersten, wodurch sich zu einem Zeitpunkt t₂>t₁ eine zeitliche Überlappung der Kanäle 10 und 12 ergibt. Im ersten System wird diese "Sliding Collision" anhand der Zerstörung der jeweils letzten Bits eines jeden im Kanal 10 übertragenen Bitrahmens, also anhand des Vergleiches der X- und Z-Felder erkannt.

Die Teilfigur (d) in FIG 2 zeigt zusammen mit Teilfigur (c) die Verhältnisse nach der Zwangssynchronisation beider Systeme durch eine erfindungsgemäße Frequenzanpassung. Dabei kann die Synchronisation z.B. allein durch Frequenzanhebung im ersten, d.h. "langsameren" System erfolgen. Der nächste auf die Synchronisation folgende Bitrahmen (und damit der gesamte DECT-Multiframe) des ersten Systems beginnt dementsprechend früher als dies ohne Synchronisation der Fall gewesen wäre, so daß die Überlappung zwischen den Kanälen 10 und 12 beider Systeme und damit die gegenseitige Störung aufgehoben wird. Da jetzt beide Zeitbasen weitestgehend synchron laufen, ist das Auftreten weiterer Überlappungen ausgeschlossen, zumindest jedoch deutlich verzögert.

In FIG 3 ist das erfindungsgemäße Verfahren zur Behandlung einer "Sliding Collision" anhand eines Flußdiagramm in Einzelheiten dargestellt.

In einem TDMA-System wird in Schritt 1, z.B. wie bereits oben im Falle von DECT-Systemen beschrieben, eine Störung durch "Sliding Collission" anhand der Zerstörung von einzelnen Bits oder ganzen Bitbereichen eines in einem TDMA-Zeitschlitz übertragenen Bitrahmens erkannt. Um eine "Sliding Collission" von Störungen mit einer anderen Ursache zu unterscheiden, geschieht die Prüfung z.B. mittels einer statistischen Auswertung der in mehreren aufeinanderfolgenden Bitrahmen eines Zeitschlitzes auftretenden Bitfehler. In einem ersten Korrekturschritt 2 erfolgt daraufhin eine Frequenzänderung der Zeitbasis des Systems. Je nachdem, ob die Zerstörung von Bits am Anfang oder am Ende der Bitrahmen auftritt, erfolgt dabei der Darstellung in FIG 2 entsprechend entweder eine Frequenzsenkung oder -erhöhung, also eine zumindest teilweise Anpassung an die Frequenz des störenden Systems. Dabei werden alle im Zuge der Synchronisation erfolgenden Frequenzänderungen jeweils zu einem Zeitpunkt durchgeführt, zu dem im System keine Daten übertragen werden, also zweckmäßigerweise in den Schutzzeiten am Ende eines jeden Zeitschlitzes. In einem nächsten Schritt 3 wird geprüft, ob der Betrag DF der über alle Korrekturschritte kumulierten Frequenzkorrektur einen festgelegten Maximalwert DFₘₐₓ überschreitet. Die Größe der ersten Korrektur wird dabei sinnvollerweise kleiner als DFₘₐₓ gewählt (sinnvolle Größenordnung bei DECT: ca. 1 ppm bezogen auf die Ausgangsfrequenz), so daß mit dem nächsten Schritt 4 fortgefahren werden kann. Hier wird anhand des/der nächsten nach der Korrektur im selben Einzelkanal empfangenen Bitrahmen(s) geprüft, ob die Anzahl m der fehlerhaften Bits im überprüften Bitbereich, bei DECT-Systemen also im S- bzw. Z-Feld, eine festgesetzte Schwelle S₁ unterschreitet (z.B. wird S₁ = 2 gewählt.). Ist dies noch nicht der Fall, so ist eine Synchronisation noch nicht erreicht und es beginnt eine Iteration durch Rücksprung zu Schritt 2 mit einer weiteren Frequenzkorrektur. Anderenfalls wird in Schritt 5 anhand des Vergleiches der Anzahl m noch verbleibender Bitfehler mit einer zweiten Schwelle S₂ (mit S₂>S₁) getestet, ob eine Überkompensation der ursprünglichen Frequenzdifferenz vorliegt. Eine solche Überkompensation wird z.B. angenommen, wenn kein einziger Bitfehler mehr auftritt (S₂=1). In einem Schritt 6 wird dann ein Teil der letzten Korrektur zurückgenommen und zur erneuten Prüfung zu Schritt 4 zurückverzweigt. Liegt die Zahl m der verbliebenen Bitfehler jedoch in dem durch die Schwellen S₁ und S₂ aufgespannten Toleranzintervall, so ist die gewünschte Synchronisierung zumindest weitestgehend erreicht. Am Ende einer jeden Verbindung im System werden in Schritt 7 die erfolgten Korrekturen als Ganzes zurückgenommen, um eine andauernde Frequenzdominanz des korrigierten Systems gegenüber benachbarten Systemen zu vermeiden. Stellt sich im Korrekturverfahren bei Schritt 3 heraus, daß die für eine Synchronisation erforderliche Frequenzkorrektur den festgelegten Maximalwert DFₘₐₓ übertrifft, so erfolgt in Schritt 8 unter Rücknahme aller bisher erfolgten Frequenzkorrekturen ein Kanalwechsel zu einem ungestörten Funkkanal ("Handover").

## Patentansprüche

1. Verfahren zum Betrieb von TDMA-Funksystemen, insbesondere bei Schnurlos-Kommunikationssystemen nach dem DECT-Standard, wobei eine in einem ersten TDMA-Funksystem auftretende und durch eine zeitliche Drift der TDMA-Rahmen (F1) des TDMA-Funksystems relativ zu den TDMA-Rahmen (F2) eines zweiten TDMA-Funksystems bedingte Störung eines Funkkanals als solche erkannt wird,
**dadurch gekennzeichnet,**
daß die die Störung anhand der Zerstörung des letzten/der letzten Bits eines in einem TDMA-Zeitschlitz (1 bis 24) übertragenen Bitrahmens erkannt wird und durch Zwangssynchronisierung behoben wird, indem die Frequenz der Zeitbasis zumindest eines der beiden TDMA-Funksysteme so verändert wird, daß die Zeitbasen beider TDMA-Funksysteme gleichlaufen.

2. Verfahren nach Anspruch 1,
**dadurch gekennzeichnet,**
daß bei den TDMA-Funksystemen jeder in einem TDMA-Zeitschlitz (1 bis 24) übertragene Bitrahmen an seinem Ende ein Bitfeld (Z) enthält, das nur redundante und/oder für die Nutzdatenübertragung nicht benötigte Informationen beinhaltet.

3. Verfahren nach einem der vorhergehenden Ansprüche,
**dadurch gekennzeichnet,**
daß die Anpassung der Frequenzen der Zeitbasen der TDMA-Funksysteme aneinander iterativ in kleinen Schritten erfolgt.

4. Verfahren nach einem der vorhergehenden Ansprüche,
**dadurch gekennzeichnet,**
daß die Frequenzänderung in einem Zeitfenster erfolgt, in dem im betroffenen TDMA-System keine Datenübertragung stattfindet.

5. Verfahren nach einem der vorhergehenden Ansprüche,
**dadurch gekennzeichnet,**
daß zumindest in einem TDMA-Funksystem von dem gestörten Funkkanal (10) zu einem anderen ausreichend ungestörten Funkkanal gewechselt wird, wenn der Betrag der für ein Gleichlaufen der Zeitbasen beider TDMA-Funksysteme benötigten Frequenzänderung (DF) einen vorgegebenen Grenzbetrag (DFₘₐₓ) überschreitet.

6. Verfahren nach einem der vorhergehenden Ansprüche,
**dadurch gekennzeichnet,**
daß nach Beendigung einer jeden Funkverbindung in einem TDMA-Funksystem die veränderte Frequenz seiner Zeitbasis wieder auf ihren ursprünglichen Wert zurückgesetzt wird.

## Claims

1. Process for operation of TDMA radio systems, in particular in wireless communication systems conforming to the DECT standard, a disturbance of a radio channel occurring in a first TDMA radio system and caused by a time drift of the TDMA frames (F1) of the TDMA radio system in relation to the TDMA frames (F2) of a second TDMA radio system being detected as such, characterized in that the disturbance is detected on the basis of the destruction of the last bit/bits of a bit frame transmitted in a TDMA time slot (1 to 24) and is rectified by compelled synchronization, in that the frequency of the time base of at least one of the two TDMA radio systems is changed in such a way that the time bases of the two TDMA radio systems run synchronously.

2. Process according to Claim 1, characterized in that, in the TDMA radio systems, each bit frame transmitted in a TDMA time slot (1 to 24) contains at its end a bit field (Z) which comprises only redundant information and/or information not required for the transmission of useful data.

3. Process according to one of the preceding claims, characterized in that the adaptation of the frequencies of the time bases of the TDMA radio systems to one another takes place iteratively in small steps.

4. Process according to one of the preceding claims, characterized in that the frequency change takes place in a time window in which no data transmission is taking place in the TDMA system concerned.

5. Process according to one of the preceding claims, characterized in that, at least in one TDMA radio system, a change is made from the disturbed radio channel (10) to another, adequately undisturbed radio channel if the amount of the frequency change (DF) required for synchronous running of the time bases of the two TDMA radio systems exceeds a predetermined limiting amount (DFₘₐₓ).

6. Process according to one of the preceding claims, characterized in that, after ending each radio link in a TDMA radio system, the changed frequency of its time base is reset to its original value again.

## Revendications

1. Procédé pour faire fonctionner des systèmes radio TDMA, notamment dans le cas de systèmes de communication sans fil selon le standard DECT, dans lequel on détecte en tant que telle une perturbation apparaissant dans un premier système radio TDMA et due à une dérive temporelle des trames TDMA (F1) du système radio TDMA par rapport aux trames TDMA (F2) d'un deuxième système radio TDMA,
caractérisé par le fait qu'on détecte la perturbation à l'aide de la destruction du dernier bit ou des derniers bits d'une trame de bits transmise dans un créneau temporel TDMA (1 à 24) et qu'on la supprime au moyen d'une synchronisation forcée en modifiant la fréquence de la base de temps au moins de l'un des deux systèmes radio TDMA de telle sorte que les bases de temps des deux systèmes radio TDMA sont synchronisées.

2. Procédé selon la revendication 1, caractérisé par le fait que, dans les systèmes radio TDMA, chaque trame de bits contenue dans un créneau temporel TDMA (1 à 24) contient à son extrémité un champ de bits (Z) qui ne contient que des informations redondantes et/ou inutiles à la transmission de données utiles.

3. Procédé selon l'une des revendications précédentes, caractérisé par le fait que l'adaptation des fréquences des bases de temps des systèmes radio TDMA l'une à l'autre s'effectue de manière itérative par petites étapes.

4. Procédé selon l'une des revendications précédentes, caractérisé par le fait que la modification de fréquence s'effectue dans une fenêtre temporelle dans laquelle aucune transmission de données n'a lieu dans le système TDMA concerné.

5. Procédé selon l'une des revendications précédentes, caractérisé par le fait que, au moins dans un système radio TDMA, on change du canal radio perturbé (10) à un autre canal radio suffisamment non perturbé si la valeur absolue de la modification de fréquence (DF) nécessaire à un synchronisme des bases de temps des deux systèmes radio TDMA dépasse une valeur limite prescrite (DFₘₐₓ).

6. Procédé selon l'une des revendications précédentes, caractérisé par le fait que, après la fin d'une liaison radio dans un système radio TDMA, on remet la fréquence modifiée de sa base de temps à sa valeur initiale.
